# EUROPEAN PATENT APPLICATION

(11) **EP 4 786 047 A1**
(43) Date of publication of application: **05.08.2026**
(21) Application number: 24871317.4
(22) Date of filing: 08.03.2024
(51) Int. Cl.: B01J 27/24, B01J 37/03, C01C 1/04, C01F 17/30

(54) **AMMONIA SYNTHESIS CATALYST AND METHOD FOR PRODUCING SAME**

(30) Priority: 25.09.2023 JP 2023160976
(71) Applicant: Hitachi, Ltd., Tokyo 100-8280 (JP)
(72) Inventor: TAMURA, Shinya, Tokyo 100-8280 (JP)
(74) Representative: Mewburn Ellis LLP
(86) International application number: PCT/JP2024/009152
(87) International publication number: WO 2025/069501

(57) **Abstract**

Provided is an ammonia synthesis catalyst capable of synthesizing ammonia efficiently and a production method therefor. The ammonia synthesis catalyst includes a carrier and an active metal supported on the carrier. The active metal contains at least one kind selected from ruthenium and nickel, and does not have iron as a main component. The carrier is a rare-earth oxynitride.

## Description

### Technical Field

The present invention relates to an ammonia synthesis catalyst and a method for producing same.

### Background Art

In recent years, ammonia has attracted attention as a component for which application to uses such as food, fertilizer, and an energy carrier for hydrogen energy is possible. Ammonia has conventionally been industrially synthesized using a Haber-Bosch process using an iron-based catalyst as a catalyst, but with an iron-based catalyst it is necessary to carry out a reaction between hydrogen and nitrogen under high-temperature and high-pressure conditions. Therefore, with the object of synthesizing ammonia under milder conditions than in the Haber-Bosch process, research on various types of ammonia synthesis catalysts is being advanced.

For example, in Patent Literature 1, a method for producing ammonia from ammonia synthesis gas by contacting, under ammonia production conditions, a catalyst containing ruthenium supported on a carrier of boron nitride and/or silicon nitride as a catalytically active material, with ammonia synthesis gas, is disclosed.

In Patent Literature 2, an ammonia synthesis catalyst that is a catalyst to synthesize ammonia from nitrogen and hydrogen, in which a metal is supported on a carrier composed of a semiconductor containing a transition element, is disclosed.

In Patent Literature 3, a composite oxide having metal elements indicated by a composition of a general formula (1) AₙX_{y}Mₘ (1) (in the general formula (1), A is a lanthanoid, at least a part or all of which is in the trivalent state, X is either a Group 2 element of the periodic table selected from the group consisting of Ca, Sr, and Ba, or a lanthanoid that represents an element different from the A, M is any one of a Group 1 element of the periodic table, a Group 2 element selected from the group consisting of Ca, Sr, and Ba, or a lanthanoid, and represents an element different from the A and the X, ***n*** is 0 < ***n*** < 1, ***y*** is 0 < ***y*** < 1, ***m*** is 0 ≤ ***m*** < 1, and ***n*** + ***y*** + ***m*** = 1), is disclosed.

In Patent Literature 4, an ammonia synthesis catalyst containing a composite oxide carrier in which at least one added metal element selected from the group consisting of titanium (Ti), zirconium (Zr), hafnium (Hf), aluminum (Al), gallium (Ga), indium (In), silicon (Si), germanium (Ge), and tin (Sn) is in solid solution in a composite oxide containing cerium (Ce) and a lanthanoid other than the Ce, and that has a composition represented by the following formula: CeₓA_{1-x-y}B_{y}O_{d} (in the formula, A represents the lanthanoid other than the Ce, B represents the added metal element, ***x*** represents a molar fraction of the Ce, ***y*** represents a molar fraction of the added metal element, 1-***x***-***y*** represents a molar fraction of the lanthanoid other than the Ce, ***x*** and y satisfy 0.1 ≤ ***x*** ≤ 0.9, 0.01 ≤ ***y*** ≤ 0.3, and 0.11 ≤ ***x***+***y*** ≤ 0.91, ***d*** represents a molar ratio of oxygen atoms, and satisfies 1.5 ≤ ***d*** ≤ 2), and ruthenium (Ru) supported on the composite oxide carrier, is disclosed.

### Citation List

### Patent Literature

Patent Literature 1: JP 2001-149780 A
Patent Literature 2: JP 2015-66468 A
Patent Literature 3: WO 2019/059190 A
Patent Literature 4: JP 2022-165370 A

### Summary of Invention

### Technical Problem

However, toward the realization of carbon neutrality, further moderation of catalyst reaction conditions in ammonia synthesis is required.

The present invention has been made in view of such points, and its objective is to provide an ammonia synthesis catalyst capable of synthesizing ammonia efficiently and a production method therefor.

### Solution to Problem

As a result of intensive studies, the present inventors found that an ammonia synthesis catalyst that uses a rare-earth oxynitride as a carrier improves nitrogen dissociation ability at low temperature and, as a result, the synthesis of ammonia can be performed efficiently, and completed the present invention.

That is, the ammonia synthesis catalyst according to the present invention comprises a rare-earth oxynitride and a metal catalyst supported on the rare-earth oxynitride. The present specification includes the disclosure of Japanese Patent Application No. 2023-160976 that serves as the basis for the priority of the present application.

### Advantageous Effects of Invention

According to the present invention, an ammonia synthesis catalyst capable of synthesizing ammonia efficiently and a production method therefor are provided. Problems, configurations, and effects other than those described above will be clarified by the following description of the embodiments.

### Brief Description of Drawings

Fig. 1 is a schematic diagram illustrating an effect in an ammonia synthesis catalyst of the present invention.
Fig. 2 is a diagram showing a production flow for producing a cerium-lanthanum composite oxynitride (Ce_{0.5}La_{0.5}OₐN_{b}) from a cerium-lanthanum composite oxide (Ce_{0.5}La_{0.5}Oₐ).
Fig. 3 is a graph showing an XPS spectrum of a cerium-lanthanum composite oxynitride in Example 1.
Fig. 4 is XRD patterns and appearance photographs of CeO₂ in Comparative Example 1, of Ce_{0.5}La_{0.5}Oₐ in Comparative Example 2, and of Ce_{0.5}La_{0.5}OₐN_{b} in Example 1.
Fig. 5 is a graph showing an ammonia production rate normalized by surface area for ammonia synthesis catalysts of Comparative Example 1, Comparative Example 2, and Example 1.

### Description of Embodiments

Hereinafter, using the drawings and the like, a description of an embodiment of the present invention will be given. In the drawing, for clarification, the dimensions and shapes of respective parts are exaggerated, and the actual dimensions and shapes are not accurately depicted. Therefore, the scope of the present invention is not limited to the dimensions and shapes of the respective parts shown in these drawings. Furthermore, the following description shows specific examples of the content of the present invention, and the present invention is not limited to these descriptions, and various changes and modifications can be made by those skilled in the art within the range of the technical idea disclosed in the present specification. Further, in the drawings for the description of the present invention, those having the same function are denoted by the same reference numerals, and repeated description thereof may be omitted.

The term "to" described in the description is used to mean a range having values described before and after the term "to" as the lower limit value and the upper limit value, respectively. In numerical ranges described in stages in the description, an upper limit value or a lower limit value described in one numerical range may be replaced with an upper limit value or a lower limit value in another numerical range described in stages. The upper limit values or the lower limit values in the numerical ranges described in the description may be replaced with values indicated in the examples.

The present invention relates to an ammonia synthesis catalyst comprising a carrier and an active metal supported on the carrier, wherein the active metal contains at least one kind selected from ruthenium (Ru) and nickel (Ni) and does not have iron (Fe) as a main component, and the carrier is a rare-earth oxynitride represented by the general formula AₓB_{y}OₐN_{b} (in the formula, A represents a tetravalent lanthanoid, B represents a trivalent lanthanoid, ***x*** represents a molar fraction of lanthanoid A in total lanthanoids and 0.4 ≤ ***x*** < 1, y represents a molar fraction of lanthanoid B in the total lanthanoids and 0 < ***y*** ≤ 0.6, ***x*** + ***y*** = 1, ***a*** represents a molar ratio of oxygen atoms in the carrier and 1.0 ≤ ***a*** < 2, ***b*** represents a molar ratio of nitrogen atoms in the carrier and 0 < ***b*** ≤ 0.60, and 1.4 ≤ ***a*** + ***b*** < 2).

In the active metal, the Ru content, relative to the total weight of the active metal, is usually 50 wt% or more, preferably 75 wt% or more, more preferably 90 wt% or more. Since the active metal may be composed solely of Ru, the upper limit of the Ru content is not limited.

In the active metal, the Ni content, relative to the total weight of the active metal, is usually 0 wt% or more, preferably 5 wt% or more, more preferably 10 wt% or more. Since the active metal may be composed solely of Ni, the upper limit of the Ni content is not limited.

By the active metal containing Ru and/or Ni within the above-described content range, the activity with respect to nitrogen from activation to dissociation (nitrogen activation, adsorption, and dissociation) can be made higher.

The active metal may further contain, in addition to Ru and Ni, at least one kind of metal selected from the group consisting of other metals, such as Fe, cobalt (Co), molybdenum (Mo), tungsten (W), rhenium (Re), and osmium (Os).

When the active metal contains metals other than Ru and Ni, the content of the other metal(s), relative to the total weight of the active metal, is not limited, but is usually 0.5 wt% or less, preferably 0.1 wt% or less. Since the active metal need not contain the other metals other than Ru and Ni, the lower limit of the content of other metals is not limited.

Since there is a risk that the catalytic performance deteriorates due to the active metal containing the other metals, preferably, it is desirable that the other metals are not contained in the active metal.

The average particle diameter of the active metal is not limited, but is usually 0.1 nm or more, preferably 0.5 nm or more, and is usually 50 nm or less, preferably 25 nm or less, for example, 0.1 nm to 50 nm, preferably 0.5 nm to 25 nm.

Here, the average particle diameter of the active metal can be measured by the CO pulse adsorption method.

By the average particle diameter of the active metal being within the above-described range, the number of active sites increases, and improvement in the nitrogen dissociation ability and the ammonia generation ability is possible.

The specific surface area of the active metal is not limited, but is 0.1 m²/g or more, preferably 0.5 m²/g or more, and is usually 100 m²/g or less, preferably 50 m²/g or less, and, for example, 0.1 m²/g to 100 m²/g, preferably 0.5 m²/g to 50 m²/g.

As a result of the specific surface area of the active metal being within the above-described range, it is possible to increase the covered portion of the active metal, that is, the number of catalytic active sites.

The content of the active metal in the ammonia synthesis catalyst is not limited, but, relative to the total weight of the ammonia synthesis catalyst, it is usually 3 wt% or more, preferably 5 wt% or more, and is usually 20 wt% or less, preferably 10 wt% or less, for example 3 wt% to 20 wt%, and preferably 5 wt% to 10 wt%.

By the ammonia synthesis catalyst containing the active metal within the above-described content range, the activity with respect to nitrogen from activation to dissociation (nitrogen activation, adsorption, and dissociation) can be made higher.

The carrier to support the active metal is a rare-earth oxynitride represented by the general formula AₓB_{y}OₐN_{b} (in the formula, A represents a tetravalent lanthanoid, B represents a trivalent lanthanoid, ***x*** represents a molar fraction of lanthanoid A in total lanthanoids and 0.4 ≤ ***x*** < 1, ***y*** represents a molar fraction of lanthanoid B in the total lanthanoids and 0 < ***y*** ≤ 0.6, ***x*** + ***y*** = 1, ***a*** represents a molar ratio of oxygen atoms in the carrier and 1.0 ≤ ***a*** < 2, ***b*** represents a molar ratio of nitrogen atoms in the carrier and 0 < ***b*** ≤ 0.60, and 1.4 ≤ ***a***+***b*** < 2), and has a fluorite-type crystal structure.

A tetravalent lanthanoid selected as A is not limited, but is at least one kind selected from the group consisting of cerium (Ce), praseodymium (Pr), neodymium (Nd), terbium (Tb), and dysprosium (Dy). The tetravalent lanthanoid selected as A is preferably Ce that can stably take tetravalent.

The trivalent lanthanoid selected as B is not limited, but is at least one kind selected from the group consisting of lanthanum (La), Pr, Nd, promethium (Pm), samarium (Sm), europium (Eu), gadolinium (Gd), Tb, Dy, holmium (Ho), erbium (Er), thulium (Tm), ytterbium (Yb), and lutetium (Lu). The trivalent lanthanoid selected as B is preferably inexpensive La that can stably take trivalent.

The molar fraction ***x*** in the total lanthanoids of A is not limited as long as the carrier can have a fluorite-type crystal structure, but is 0.4 or more, preferably 0.45 or more, and is less than 1, preferably 0.60 or less, more preferably 0.55 or less; for example, 0.4 ≤ ***x*** < 1, preferably 0.45 ≤ ***x*** ≤ 0.60, more preferably 0.45 ≤ ***x*** ≤ 0.55.

The molar fraction ***y*** in the total lanthanoids of B is not limited as long as the carrier can have a fluorite-type crystal structure, but is greater than 0, preferably 0.40 or more, more preferably 0.45 or more, and 0.6 or less, preferably 0.55 or less, for example, 0 < ***y*** ≤ 0.6, preferably 0.40 ≤ ***x*** ≤ 0.55, more preferably 0.45 ≤ ***x*** ≤ 0.55.

By using a rare-earth oxynitride having a fluorite-type crystal structure in which different lanthanoids are mixed as a carrier of an active metal, it is possible to enhance the electron-donating property from the carrier to the active metal, and it is possible to promote the dissociation of N₂ on the active metal.

In the present invention, the carrier is doped with a nitrogen atom. A nitrogen atom is doped in the crystal structure of a carrier by substituting for an oxygen atom.

The molar ratio ***a*** of oxygen atoms in the carrier varies depending on the molar fractions (***x*** and ***y***) of lanthanoids A and B and the molar ratio (b) of nitrogen atoms, and is not limited as long as the carrier can have a fluorite-type crystal structure, but is smaller than 2, preferably 1.8 or less, more preferably 1.6 or less, and is 1.0 or more, preferably 1.3 or more, more preferably 1.4 or more, and, for example, 1.0 ≤ ***a*** < 2, preferably 1.3 ≤ ***a*** ≤ 1.8, more preferably 1.4 ≤ ***a*** ≤ 1.6.

The molar ratio ***b*** of nitrogen atom in the carrier varies depending on the molar fractions (***x*** and ***y***) of lanthanoids A and B and the molar ratio (a) of oxygen atoms, and is not limited as long as the carrier can have a fluorite-type crystal structure, but is greater than 0, preferably 0.05 or more, more preferably 0.10 or more, and is 0.60 or less, preferably 0.30 or less, more preferably 0.20 or less, and still more preferably 0.15 or less, and, for example, 0 < ***b*** ≤ 0.60, preferably 0.05 ≤ ***b*** ≤ 0.30, and more preferably 0.10 ≤ ***b*** ≤ 0.20.

The sum ***a***+***b*** of the molar ratio ***a*** of oxygen atoms and the molar ratio ***b*** of nitrogen atoms in the carrier varies depending on the molar fractions (***x*** and ***y***) of lanthanoids A and B, and is not limited as long as the carrier can have a fluorite-type crystal structure, but is less than 2, preferably 1.8 or less, more preferably 1.7 or less, and is 1.4 or more, preferably 1.5 or more, more preferably 1.6 or more, and, for example, 1.4 ≤ ***a***+***b*** < 2, preferably 1.5 ≤ ***a***+***b*** ≤ 1.8, more preferably 1.6 ≤ ***a***+***b*** ≤ 1.7.

By the carrier containing oxygen atoms and nitrogen atoms at a molar ratio in the above-described range, the basicity of the carrier is increased, and furthermore, by including a pseudo nitrogen vacancy or a pseudo oxygen vacancy as described below, dissociation of a nitrogen bond at a low temperature is caused, and as a result the efficiency of ammonia production can be improved.

The average particle diameter of the carrier is not limited, but is usually 0.1 µm or more, preferably 0.5 µm or more, and is usually 100 µm or less, preferably 10 µm or less, for example, 0.1 µm to 100 µm, preferably 0.5 µm to 10 µm.

Here, the average particle diameter of the carrier can be measured by a laser diffraction type particle size distribution measuring apparatus.

By the average particle diameter of the carrier being within the above-described range, it is possible to increase the covered portion of the active metal, that is, the number of catalytic active sites.

The BET specific surface area of the carrier is not limited, but is usually 1 m²/g or more, preferably 5 m²/g or more, and is usually 300 m²/g or less, preferably 200 m²/g or less, for example, 1 m²/g to 300 m²/g, preferably 5 m²/g to 200 m²/g.

Herein, the BET specific surface area means the specific surface area calculated by the BET method, the BET specific surface area being known in the art.

As a result of the BET specific surface area of the carrier being within the above-described range, it is possible to increase the covered portion of the active metal, that is, the number of catalytic active sites.

The BET specific surface area of the catalyst is not limited, but is usually 1 m²/g or more, preferably 5 m²/g or more, and is usually 300 m²/g or less, preferably 200 m²/g or less, for example, 1 m²/g to 300 m²/g, preferably 5 m²/g to 200 m²/g.

As a result of the BET specific surface area of the catalyst being within the above-described range, it is possible to increase the covered portion of the active metal, that is, the number of catalytic active sites.

The present invention also relates to the method for producing the ammonia synthesis catalyst described in the foregoing description.

Except for using the rare-earth oxynitride described in the above description as the carrier, the ammonia synthesis catalyst of the present invention can be produced by supporting an active metal on the carrier using known methods in the art.

The carrier of the present invention can be produced as follows, for example.

First, a rare-earth oxide before into which nitrogen is doped to form the rare-earth oxynitride described above, namely a rare-earth oxide represented by the general formula AₓB_{y}O₂ (in the formula, A represents a tetravalent lanthanoid, B represents a trivalent lanthanoid, ***x*** represents a molar fraction of lanthanoid A of total lanthanoids, 0.4 ≤ ***x*** < 1, ***y*** represents a molar fraction of lanthanoid B of the total lanthanoids, 0 < ***y*** ≤ 0.6, and ***x*** + ***y*** = 1) is produced. Here, the rare-earth oxide has the same components as the rare-earth oxynitride described in the foregoing description, except that it is not doped with nitrogen.

It is possible to produce the rare-earth oxide by known methods in the art, such as a coprecipitation method or a complex polymerization method.

### (Coprecipitation Method)

In one embodiment, a rare-earth oxide containing lanthanoid A and lanthanoid B is prepared by a coprecipitation method using a composite oxide precursor solution containing a salt of lanthanoid A and a salt of lanthanoid B in a predetermined ratio.

Specifically, a salt of lanthanoid A, for example a salt of Ce, a salt of lanthanoid B, for example a salt of La, and a solvent, for example water, alcohol, or a mixed solution of water and alcohol, are mixed at a predetermined ratio, particularly at a molar fraction of each lanthanoid as described above, and are dissolved to prepare a composite oxide precursor solution.

As for salts of each lanthanoid, there is no limitation as long as they are soluble in the solvent, and examples include a nitrate, a sulfate, a halide, for example a chloride, an organic acid salt, for example an acetate, and the like.

Next, using the composite oxide precursor solution after preparation, by the coprecipitation method, a rare-earth oxide containing lanthanoid A and lanthanoid B is formed. Specifically, the composite oxide precursor solution and a basic solution, for example an ammonia aqueous solution, a sodium hydroxide aqueous solution, and a potassium hydroxide aqueous solution, and the like, are mixed, for example by adding the basic solution dropwise into the composite oxide precursor solution, to form a precipitate by a neutralization reaction.

Thereafter, the obtained precipitate is subjected to filtration and drying, and then calcined, whereby a rare-earth oxide containing lanthanoid A and lanthanoid B is obtained.

It is possible to carry out filtration by a known method in the art.

Following the filtration step, the drying of the filtered precipitate is performed under an oxidizing atmosphere (for example, in air) or under an inert gas atmosphere (for example, under a nitrogen atmosphere or under an argon atmosphere).

The drying temperature of the precipitate is usually 50°C or more, preferably 80°C or more, and is usually 150°C or less, preferably 120°C or less, for example, 50°C to 150°C, preferably 80°C to 120°C. By setting the drying temperature of the precipitate within the above-described range, it is possible to sufficiently remove the moisture in the precipitate.

Further, the drying time of the precipitate is usually 30 minutes or more, preferably 60 minutes or more, more preferably 120 minutes or more. By setting the drying time of the precipitate within the above-described range, it is possible to sufficiently remove the moisture in the precipitate. It should be noted that regarding the upper limit of the drying time of the precipitate, although the time of the step becomes long, the upper limit is not limited.

Following the drying step, the dried precipitate is calcined under an oxidizing atmosphere (for example, in air) or under an inert gas atmosphere (for example, under a nitrogen atmosphere or under an argon atmosphere).

The calcination temperature of the precipitate is usually 610°C or more, preferably 625°C or more, more preferably 650°C or more, and is usually 900°C or less, preferably 800°C or less, more preferably 750°C or less, for example, 610°C to 900°C, preferably 625°C to 800°C, more preferably 650°C to 750°C. By setting the calcination temperature of the precipitate within the above-described range, it is possible to improve the stability of the rare-earth oxide, thereby increasing the ammonia synthesis activity of the obtained ammonia synthesis catalyst.

Additionally, the calcination time of the precipitate is usually 1 hour or more, preferably 2 hours or more, more preferably 3 hours or more, and is usually 48 hours or less, preferably 36 hours or less, more preferably 24 hours or less, for example, 1 hour to 48 hours, preferably 2 hours to 36 hours, and more preferably 3 hours to 24 hours. By setting the calcination time of the precipitate within the above-described range, it is possible to improve the stability of the rare-earth oxide, thereby increasing the ammonia synthesis activity of the obtained ammonia synthesis catalyst.

### (Complex Polymerization Method)

In one embodiment, a rare-earth oxide containing lanthanoid A and lanthanoid B is prepared by a complex polymerization method using a composite oxide precursor solution containing a salt of lanthanoid A and a salt of lanthanoid B in a predetermined ratio.

Specifically, a salt of lanthanoid A, for example a salt of Ce, a salt of lanthanoid B, for example a salt of La, and a solvent, for example water, alcohol, or a mixed solution of water and alcohol, are mixed at a predetermined ratio, particularly at a molar fraction of each lanthanoid as described above, and are dissolved to prepare a composite oxide precursor solution.

As for salts of each lanthanoid, there is no limitation as long as they are soluble in the solvent, and examples include a nitrate, a sulfate, a halide, for example a chloride, an organic acid salt, for example an acetate, and the like.

Next, using the composite oxide precursor solution after preparation, by the complex polymerization method, a rare-earth oxide containing lanthanoid A and lanthanoid B is formed. Specifically, oxycarboxylic acid or phosphoric acid is added to the composite oxide precursor solution, and dissolved, and further glycol or glycerin is added and mixed. Accordingly, a composite metal complex containing lanthanoid A and lanthanoid B is formed.

Examples of oxycarboxylic acids include for example, citric acid, malic acid, lactic acid, and the like. Regarding the amount added of such oxycarboxylic acid or phosphoric acid, relative to the total amount of lanthanoid A and lanthanoid B, it is usually 0.1 equivalent or more, preferably 1 equivalent or more, more preferably 2 equivalents or more, and is usually 50 equivalents or less, preferably 20 equivalents or less; for example, 0.1 equivalent to 50 equivalents, preferably 1 equivalent to 20 equivalents, more preferably 2 equivalents to 20 equivalents. By setting the amount added of oxycarboxylic acid or phosphoric acid within the above-described range, it is possible to sufficiently form a composite metal complex containing lanthanoid A and lanthanoid B, and it is possible to obtain a uniform rare-earth oxide.

Examples of the glycol include, for example, ethylene glycol, propylene glycol, diethylene glycol, and the like. As for the amount added of such glycol or glycerin, relative to the total amount of lanthanoid A and lanthanoid B, it is usually 0.01 equivalent or more, preferably 0.05 equivalent or more, more preferably 0.1 equivalent or more, and is usually 50 equivalents or less, preferably 20 equivalents or less, more preferably 10 equivalents or less, and, for example, 0.01 equivalent to 50 equivalents, preferably 0.05 equivalent to 20 equivalents, more preferably 0.1 equivalent to 10 equivalents. By setting the amount added of glycol or glycerin within the above-described range, it is possible to sufficiently form a composite metal complex containing lanthanoid A and lanthanoid B, and it is possible to obtain a uniform rare-earth oxide.

Next, by heating the aqueous solution of the composite metal complex obtained in this manner, a dehydration esterification reaction proceeds in a chain-like manner between the carboxyl group of the oxycarboxylic acid and the hydroxyl group of the glycol, and a polyester polymer gel is produced. In the polyester polymer gel obtained in this manner, since lanthanoid A and lanthanoid B are in a uniform dispersion, by calcining this polyester polymer gel as described below, a rare-earth oxide having a uniform dispersion of lanthanoid A and lanthanoid B is obtained.

The heating temperature of the aqueous solution of the composite metal complex is usually 50°C or more, preferably 80°C or more, more preferably 100°C or more, and is usually 500°C or less, preferably 480°C or less, more preferably 450°C or less; for example, 50°C to 500°C, preferably 80°C to 480°C, more preferably 100°C to 450°C. By setting the heating temperature of the aqueous solution of the composite metal complex within the above-described range, it is possible to promote the dehydration esterification reaction to sufficiently generate a polyester polymer gel, and it is possible to obtain a uniform rare-earth oxide in the calcination step described below.

Further, the heating time of the aqueous solution of the composite metal complex is usually 30 minutes or more, preferably 60 minutes or more, more preferably 120 minutes or more. By setting the heating time of the aqueous solution of composite metal complex within the above-described range, it is possible to promote the dehydration esterification reaction to sufficiently generate a polyester polymer gel, and it is possible to obtain a uniform rare-earth oxide in the calcination step described below. Note that, with respect to the upper limit of the heating time of the aqueous solution of the composite metal complex, although the time of the step becomes longer, the upper limit is not limited.

Next, the polyester polymer gel thus obtained is calcined under an oxidizing atmosphere (for example, in air) or under an inert gas atmosphere (for example, under a nitrogen atmosphere or under an argon atmosphere) to carbonize organic matter and obtain a composite oxide precursor powder.

The calcination temperature of the polyester polymer gel is usually 400°C or more, preferably 425°C or more, more preferably 450°C or more, and is usually 600°C or less, preferably 575°C or less, more preferably 550°C or less, for example 400°C to 600°C, preferably 425°C to 575°C, more preferably 450°C to 550°C. By setting the calcination temperature of the polyester polymer gel within the above-described range, the carbonization of organic matter is sufficiently promoted, and a uniform rare-earth oxide can be obtained.

Further, the calcination time of the polyester polymer gel is usually 30 minutes or more, preferably 60 minutes or more, and more preferably 120 minutes or more. By setting the calcination time of the polyester polymer gel within the above-described range, the carbonization of organic matter is sufficiently promoted, and a uniform rare-earth oxide can be obtained. Note that, regarding the upper limit of the calcination time of the polyester polymer gel, although the time of the step becomes longer, the upper limit is not limited.

Next, by calcining the composite oxide precursor powder thus obtained under an oxidizing atmosphere (for example, in air) or under an inert gas atmosphere (for example, under a nitrogen atmosphere or under an argon atmosphere), removal of the carbon component occurs, and a rare-earth oxide containing lanthanoid A and lanthanoid B is obtained.

The calcination temperature of the composite oxide precursor powder is usually 610°C or more, preferably 625°C or more, more preferably 650°C or more, and is usually 900°C or less, preferably 800°C or less, more preferably 750°C or less, for example, 610°C to 900°C, preferably 625°C to 800°C, more preferably 650°C to 750°C. By setting the calcination temperature of the composite oxide precursor powder within the above-described range, it is possible to promote the removal of the carbon component sufficiently, thereby increasing the ammonia synthesis activity in the obtained ammonia synthesis catalyst.

In addition, the calcination time of the composite oxide precursor powder is usually 1 hour or more, preferably 2 hours or more, more preferably 3 hours or more, and is usually 48 hours or less, preferably 36 hours or less, more preferably 24 hours or less, for example, 1 hour to 48 hours, preferably 2 hours to 36 hours, more preferably 3 hours to 24 hours. By setting the calcination time of the composite oxide precursor powder within the above-described range, it is possible to promote the removal of the carbon component sufficiently, thereby increasing the ammonia synthesis activity in the obtained ammonia synthesis catalyst.

Subsequently, the rare-earth oxide obtained by the coprecipitation method or the complex polymerization method is doped with nitrogen element.

It is possible to carry out nitrogen element dope by a known method in the art. For example, nitrogen element dope can be carried out by calcining a rare-earth oxide under an ammonia atmosphere.

The flow rate of ammonia during calcination of the rare-earth oxide is usually 200 sccm or more, preferably 250 sccm or more, more preferably 300 sccm or more, and is usually 1000 sccm or less, preferably 800 sccm or less, more preferably 600 sccm or less, for example, 200 sccm to 1000 sccm, preferably 250 sccm to 800 sccm, more preferably 300 sccm to 600 sccm. The concentration of ammonia gas during calcination of the rare-earth oxide is usually 1 vol% or more, preferably 5 vol% or more, and is usually 100 vol% or less, preferably 50 vol% or less, for example 1 vol% to 100 vol%, preferably 5 vol% to 50 vol%. Examples of the diluent gas for ammonia gas include, for example, nitrogen gas, argon gas, and the like. By setting the flow rate and the concentration of ammonia within the above-described range, the introduction of nitrogen element into the rare-earth oxide is allowed to proceed sufficiently, and a rare-earth oxynitride can be obtained.

The calcination temperature of the rare-earth oxide is usually 400°C or more, preferably 425°C or more, more preferably 450°C or more, and is usually 600°C or less, preferably 575°C or less, more preferably 550°C or less, for example 400°C to 600°C, preferably 425°C to 575°C, more preferably 450°C to 550°C. By setting the calcination temperature of the rare-earth oxide within the above-described range, the introduction of nitrogen element into the rare-earth oxide is allowed to proceed sufficiently, and a rare-earth oxynitride can be obtained.

In addition, the calcination time of the rare-earth oxide is usually 1 hour or more, preferably 2 hours or more, more preferably 3 hours or more, and is usually 12 hours or less, preferably 8 hours or less, more preferably 6 hours or less, for example, 1 to 12 hours, preferably 2 to 8 hours, more preferably 3 to 6 hours. By setting the calcination time of the rare-earth oxide within the above-described range, the introduction of nitrogen element into the rare-earth oxide is allowed to proceed sufficiently, and a rare-earth oxynitride can be obtained.

Note that, in the calcination of the rare-earth oxide under an ammonia atmosphere, the heating rate and the cooling rate after calcination, as well as the atmosphere during heating and the atmosphere during cooling after calcination are not limited. The heating rate is, for example, usually 5°C/min or more, preferably 10°C/min or more, and is usually 20°C/min or less, preferably 15°C/min or less, for example 5°C/min to 20°C/min, preferably 10°C/min to 15°C/min. The cooling rate after calcination is, for example, usually 5°C/min or more, preferably 10°C/min or more, and is usually 20°C/min or less, preferably 15°C/min or less, for example 5°C/min to 20°C/min, preferably 10°C/min to 15°C/min. Cooling after calcination may be by cooling naturally. The atmosphere during heating and the atmosphere during cooling after calcination may be air, a nitrogen atmosphere, an argon atmosphere, or an ammonia atmosphere. When the atmosphere during heating and the atmosphere during cooling after calcination are a nitrogen atmosphere, an argon atmosphere, or an ammonia atmosphere, the flow rate of each gas is not limited, and is usually 100 sccm or more, preferably 150 sccm or more, and is usually 300 sccm or less, preferably 250 sccm or less, for example 100 sccm to 300 sccm, preferably 150 sccm to 250 sccm.

Finally, an active metal is supported on the obtained rare-earth oxynitride by, for example, an impregnation method and an evaporation-to-dryness method, thereby obtaining an ammonia synthesis catalyst in which the active metal is supported on the rare-earth oxynitride.

Specifically, first, using a solution containing a salt of an active metal, for example a salt of Ru, and a solvent, for example water, tetrahydrofuran (THF), alcohol, or a mixed solution of water and alcohol, an active metal precursor is deposited onto the rare-earth oxynitride in the amount described in the above description.

As for salts of the active metal, there is no limitation as long as they are soluble in a solvent, and examples include a nitrate, a sulfate, a carbonate, a halide, for example a chloride, an organic acid salt, for example an acetate, a citrate, a dinitrodiammine salt, and various complexes (for example, a tetraammine complex, a carbonyl complex). When the active metal is Ru, triruthenium dodecacarbonyl [Ru₃(CO)₁₂], ruthenium acetylacetonate, ruthenium nitrosyl nitrate, and ruthenium nitrate are preferable.

Methods of depositing the active metal to the rare-earth oxynitride are not limited, and examples thereof include, for example, a method of immersing the rare-earth oxynitride in a solution containing a salt of the active metal and a solvent to impregnate the rare-earth oxynitride with the salt of the active metal (impregnation method), and a method of adsorbing a solution containing a salt of the active metal and a solvent onto the rare-earth oxynitride (adsorption method).

Next, after drying the rare-earth oxynitride to which the active metal precursor has been deposited in this manner, by calcining the rare-earth oxynitride under a reducing gas atmosphere or under an inert gas atmosphere, the ammonia synthesis catalyst in which the active metal is supported on the rare-earth oxide containing lanthanoid A and lanthanoid B is obtained. In particular, because it is calcined under the reducing gas atmosphere or under the inert gas atmosphere (preferably, under the reducing gas atmosphere), the active metal is supported on the rare-earth oxide carrier in a metallic state, and the ammonia synthesis catalyst having excellent ammonia synthesis activity is obtained.

The drying temperature of the rare-earth oxynitride to which the active metal precursor is deposited is usually 50°C or more, preferably 75°C or more, and is usually 150°C or less, preferably 125°C or less, for example, 50°C to 150°C, preferably 75°C to 125°C. Further, the drying time is usually 3 hours or more, preferably 12 hours or more. Note that, regarding the upper limit of the drying time, although the time of the step becomes long, the upper limit is not limited.

The reducing gas atmosphere is an atmosphere containing reducing gases such as hydrogen gas, carbon monoxide gas, hydrocarbon gas, and the like, and examples thereof include, for example, a mixed gas atmosphere of a reducing gas and an inert gas (nitrogen gas, argon gas, and the like). The concentration of the reducing gas in such a mixed gas atmosphere is usually 1 vol% or more, preferably 5 vol% or more, and is usually 30 vol% or less, preferably 20 vol% or less, for example, 1 vol% to 30 vol%, preferably 5 vol% to 20 vol%. Examples of diluent gases for the reducing gas include nitrogen gas, argon gas, and the like. Examples of the inert gas atmosphere include, for example, a nitrogen gas atmosphere, an argon gas atmosphere, a helium gas atmosphere, and the like.

The calcination temperature of the dried rare-earth oxynitride to which the active metal precursor is deposited is usually 200°C or more, preferably 300°C or more, and is usually 500°C or less, for example 200°C to 500°C, preferably 300°C to 500°C. Further, the calcination time is usually 0.5 hours or more, preferably 1 hour or more, and is usually 10 hours or less, preferably 5 hours or less, for example, 0.5 hours to 10 hours, preferably 1 hour to 5 hours. By setting the calcination temperature and the calcination time within the above-described ranges, it is possible to achieve uniform dispersion of all the active metals, in a state in which they are reduced sufficiently to the metallic state while avoiding sintering between particles, and to support them on the rare-earth oxynitride carrier, and the activity of the resulting ammonia synthesis catalyst can be improved.

In the method for producing the ammonia synthesis catalyst of the present invention, the ammonia synthesis catalyst produced in this manner may be molded into various forms by a known method. For example, it may be molded into pellets, and/or it may be coated on various substrates such as monolithic substrates, pellet-shaped substrates, and plate-shaped substrates.

By the method for producing the ammonia synthesis catalyst of the present invention, it is possible to produce the ammonia synthesis catalyst in which the active metal is supported on the rare-earth oxynitride in which oxygen atoms in the rare-earth oxide are substituted with nitrogen atoms.

The ammonia synthesis catalyst of the present invention can efficiently synthesize ammonia by contact with a mixed gas containing hydrogen and nitrogen. A method of bringing the ammonia synthesis catalyst into contact with the mixed gas containing hydrogen and nitrogen is not limited, and a method in a known ammonia synthesis method in the art can be adopted.

In the synthesis method of ammonia using the ammonia synthesis catalyst of the present invention, the synthesis conditions are not limited, and it is possible to adopt the conditions in the synthesis method of ammonia known in the art as they are, but, for example, the molar ratio of hydrogen to nitrogen (H₂/N₂) is usually 0.1/1 or more, preferably 0.5/1 or more, and is usually 5/1 or less, preferably 3/1 or less, for example 0.1/1 to 5/1, preferably 0.5/1 to 3/1. Further, in the mixed gas containing hydrogen and nitrogen, an inert gas (such as argon gas) may be contained as a carrier gas, but from the viewpoint of the efficiency of ammonia generation, a gas consisting only of hydrogen and nitrogen is preferred.

In addition, the reaction temperature is usually 300°C or more, preferably 350°C, and is usually 500°C or less, preferably 450°C or less, for example, 300°C to 500°C, preferably 350°C to 450°C. The reaction pressure is usually 0.1 MPa or more, preferably 1 MPa or more, and is usually 10 MPa or less, preferably 8 MPa or less; for example, 0.1 MPa to 10 MPa, preferably 1 MPa to 8 MPa.

By using the ammonia synthesis catalyst of the present invention to synthesize ammonia under the conditions in the above-described range, it is possible to synthesize ammonia efficiently.

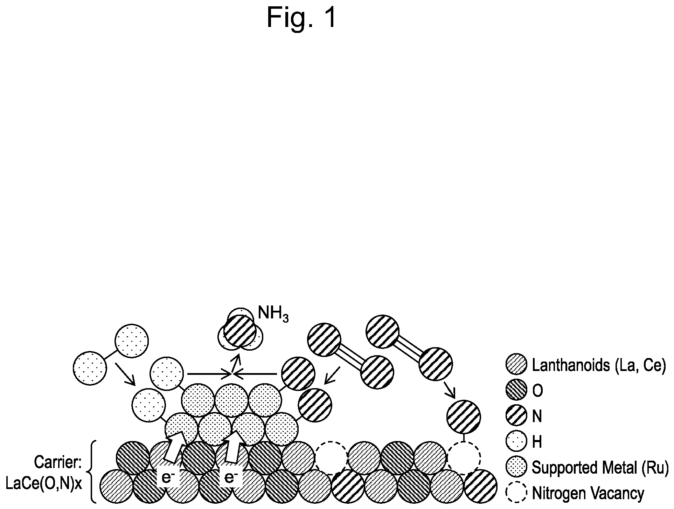

In Fig. 1, a schematic representation of the effect in the ammonia synthesis catalyst of the present invention is illustrated. In ammonia synthesis using the ammonia synthesis catalyst of the present invention, first, nitrogen molecules and hydrogen molecules, which are raw materials for ammonia synthesis, are adsorbed on the surface of Ru particles, which are the active metal supported on the surface of the rare-earth oxynitride as a carrier. Subsequently, the dissociation of the bonds of each molecule is catalyzed by Ru. Here, electrons are donated from the rare-earth oxynitride to Ru, and the electrons further promote the dissociation of each molecule on the surface of Ru. Finally, dissociated nitrogen atoms and hydrogen atoms undergo a reaction, and synthesis of ammonia occurs. In the reaction, the rare-earth oxynitride has vacancies existing on the surface (pseudo nitrogen vacancies) that have energetic activity, and has a role of capturing a nitrogen molecule in the vacancies and promoting dissociation of the bond of the captured nitrogen molecule.

### [Example]

Hereinafter, a description will be given of several Examples concerning the present invention, but it is not intended to limit the present invention to those shown in such Examples.

### I. Sample Preparation

### Comparative Example 1

Cerium oxide (CeO₂, specific surface area: 114.5 m²/g) and a Ru salt (ruthenium nitrate) adjusted to 5 wt% as Ru relative to the total weight of the cerium oxide were mixed in pure water as the solvent, followed by drying at 100°C for 12 hours and calcination at 450°C for 2 hours, and Ru/CeO₂ was prepared.

### Comparative Example 2

A cerium-lanthanum composite oxide (Ce_{0.5}La_{0.5}Oₐ, specific surface area: 39.6 m²/g) produced by the coprecipitation method and a Ru salt (ruthenium nitrate) adjusted to 5 wt% as Ru relative to the total weight of the composite oxide were mixed in pure water as the solvent, followed by drying at 100°C for 12 hours and calcination at 450°C for 2 hours, and Ru/Ce_{0.5}La_{0.5}Oₐ was prepared.

### Example 1

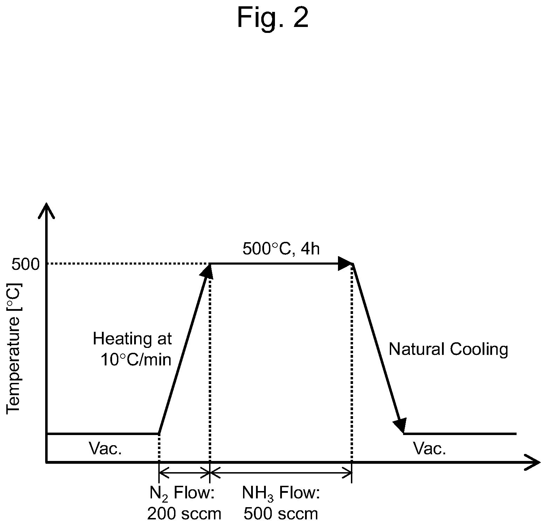

In accordance with Fig. 2, production of the cerium-lanthanum composite oxynitride (Ce_{0.5}La_{0.5}OₐN_{b}) was performed from the cerium-lanthanum composite oxide (Ce_{0.5}La_{0.5}Oₐ) resulting from production by the coprecipitation method. Specifically, after installing the cerium-lanthanum composite oxide (Ce_{0.5}La_{0.5}Oₐ) inside a furnace, vacuum evacuation of the inside of the furnace was performed. Thereafter, while flowing 200 sccm of N₂, the temperature was increased to 500°C at a rate of 10°C/min, and upon reaching 500°C, the 200 sccm of N₂ was switched to 500 sccm of NH₃, and the temperature of 500°C was maintained for a time of 4 hours, and thereafter the supply of NH₃ was stopped, and, by cooling naturally, production of cerium-lanthanum composite oxynitride (Ce_{0.5}La_{0.5}OₐN_{b}) was performed. The obtained cerium-lanthanum composite oxynitride (specific surface area: 9.33 m²/g) and a Ru salt (ruthenium nitrate) adjusted to 5 wt% as Ru relative to the total weight of the composite oxynitride were mixed in pure water as the solvent, followed by drying at 100°C for 12 hours and calcination at 450°C for 2 hours, and Ru/Ce_{0.5}La_{0.5}OₐN_{b} was prepared.

### II. Analysis

### II-1. XPS Spectrum

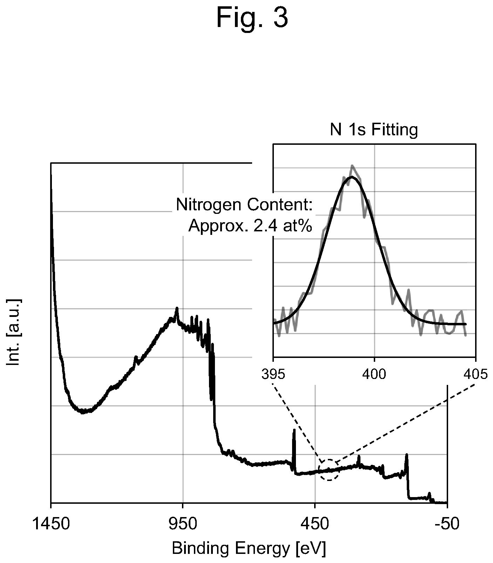

Fig. 3 shows the XPS spectrum of the cerium-lanthanum composite oxynitride in Example 1. From the N 1s fitting of the enlarged view in Fig. 3, it was found that the cerium-lanthanum composite oxynitride in Example 1 is doped with nitrogen, and that the amount of the nitrogen is about 2.4 atomic% relative to the entire composite oxynitride. Therefore, based on the results and the results of spectral intensity analysis in Fig. 3, the cerium-lanthanum composite oxynitride in Example 1 was found to be Ce_{0.52}La_{0.48}O_{1.55}N_{0.14}. In addition, based on the stoichiometric ratio, it was confirmed that an oxygen vacancy (or a nitrogen vacancy) is present in the cerium-lanthanum composite oxynitride.

### II-2. XRD Pattern

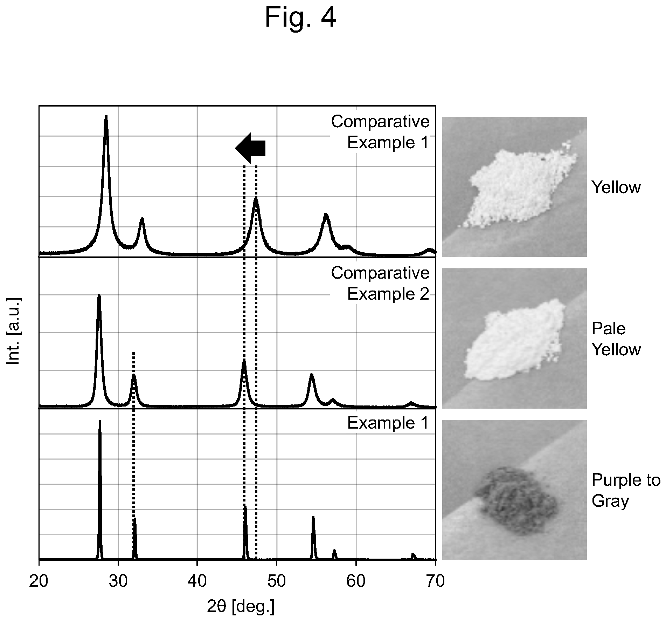

Fig. 4 shows the XRD patterns and appearance photographs of CeO₂ in Comparative Example 1, Ce_{0.5}La_{0.5}Oₐ in Comparative Example 2, and Ce_{0.5}La_{0.5}OₐN_{b} in Example 1. From Fig. 4, it was confirmed that a peak shift occurs due to the solid solution of lanthanum in cerium oxide, but a peak shift due to nitrogen doping into cerium-lanthanum composite oxide was not observed.

### II-3. Ammonia Production Rate Evaluation

Ammonia synthesis was carried out using the ammonia synthesis catalyst of Comparative Example 1, Comparative Example 2, or Example 1. The ammonia synthesis conditions are shown below.

### (Ammonia Synthesis Conditions)

After installing the ammonia synthesis catalyst in the FT-IR cell, while flowing O₂ 20%/He at 100 mL/min, the temperature was raised to 300°C and held for 30 minutes. Next, while maintaining 300°C, it was switched to H₂ 3%/He, and it was held for 30 min while flowing at 100 mL/min. Thereafter, the interior of the cell was evacuated and, after raising the temperature to 400°C, at 400°C the cell was sealed under about 10 atm of H₂ 6%/N₂, and FT-IR measurement of the gas phase was carried out for about 60 minutes.

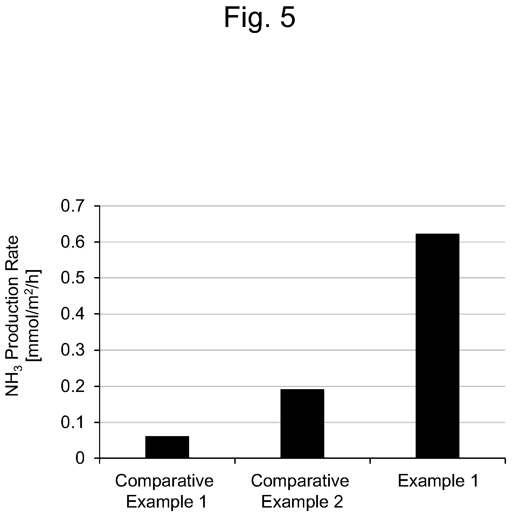

Table 1 and Fig. 5 show the ammonia production rate normalized by the surface area in the ammonia synthesis catalysts of Comparative Example 1, Comparative Example 2, and Example 1.

**Table 1**

| Category | Composition* | Catalyst Specific Surface Area [m²/g] | Supported Metal (Ru) Specific Surface Area [m²/g] | NH₃ Production Rate [mmol/g/h] | NH₃ Production Rate [mmol/m²/h] |
|---|---|---|---|---|---|
| Comparative Example 1 | 5 wt% Ru/CeO₂ | 114.5 | 20 | 1.19 | 0.0597 |
| Comparative Example 2 | 5 wt% Ru/La_{0.5}Ce_{0.5}Oₐ | 43.87 | 1.3 | 0.247 | 0.190 |
| Example 1 | 5 wt% Ru/La_{0.5}Ce_{0.5}OaN_{b} | 8.6 | 0.68 | 0.423 | 0.621 |

| | | | | | |
|---|---|---|---|---|---|
| *La and Ce represent charged (feed) composition. | | | | | |

From Fig. 5, assuming that the number of Ru active sites per surface area is equivalent, it was found that, by the nitrogen doping into the cerium-lanthanum composite oxide in the carrier, there is a dramatic improvement in catalytic performance.

It should be noted that the present invention is not limited to the above-described embodiment, and includes various modifications. For example, with respect to a part of the configuration of the embodiment, it is possible to perform addition, deletion, or replacement of other configurations.

All publications, patents, and patent applications cited in the present specification shall be incorporated into the present specification by reference in their entirety.

## Claims

1. An ammonia synthesis catalyst comprising
a carrier; and
an active metal supported on the carrier,
wherein the active metal comprises at least one kind selected from ruthenium and nickel, and does not have iron as a main component,
wherein the carrier is a rare-earth oxynitride represented by a general formula:
AₓB_{y}OₐN_{b}
(in the formula, A represents a tetravalent lanthanoid, B represents a trivalent lanthanoid, ***x*** represents a molar fraction of lanthanoid A in total lanthanoids, 0.4 ≤ ***x*** < 1, ***y*** represents a molar fraction of lanthanoid B in the total lanthanoids, 0 < ***y*** ≤ 0.6, ***x*** + ***y*** = 1, ***a*** represents a molar ratio of oxygen atoms in the carrier, 1.0 ≤ ***a*** < 2, ***b*** represents a molar ratio of nitrogen atoms in the carrier, 0 < ***b*** ≤ 0.60, and 1.4 ≤ ***a*** + ***b*** < 2).

2. The ammonia synthesis catalyst according to claim 1,
wherein 1.3 ≤ ***a*** ≤ 1.8.

3. The ammonia synthesis catalyst according to claim 1,
wherein 0.05 ≤ ***b*** ≤ 0.30.

4. The ammonia synthesis catalyst according to claim 1,
wherein the active metal is ruthenium.

5. The ammonia synthesis catalyst according to claim 1,
wherein A is cerium.

6. The ammonia synthesis catalyst according to claim 1,
wherein B is lanthanum.

7. A method for producing an ammonia synthesis catalyst, comprising:
a step of preparing a composite oxide comprising a tetravalent lanthanoid A and a trivalent lanthanoid B by a coprecipitation method using a composite oxide precursor solution comprising a salt of the lanthanoid A and a salt of the lanthanoid B at a ratio at which ***x*** and ***y*** satisfy 0.4 ≤ ***x*** < 1 and 0 < ***y*** ≤ 0.6 when a molar fraction of the lanthanoid A is ***x*** and a molar fraction of the lanthanoid B is ***y***(***x*** + ***y*** = 1);
a step of preparing a composite oxynitride comprising the lanthanoid A and the lanthanoid B by calcining the composite oxide under an ammonia atmosphere; and
a step of supporting an active metal on the composite oxynitride to obtain a catalyst in which the active metal is supported on the composite oxynitride.

8. A rare-earth oxynitride represented by a general formula:
AₓB_{y}OₐN_{b}
(in the formula, A represents a tetravalent lanthanoid, B represents a trivalent lanthanoid, ***x*** represents a molar fraction of lanthanoid A in total lanthanoids, 0.4 ≤ ***x*** < 1, ***y*** represents a molar fraction of lanthanoid B in the total lanthanoids, 0 < ***y*** ≤ 0.6, ***x** + **y** =* 1, ***a*** represents a molar ratio of oxygen atoms in the carrier, 1.0 ≤ ***a** < 2, **b*** represents a molar ratio of nitrogen atoms in the carrier, and 0 < ***b*** ≤ 0.60).
